# EUROPÄISCHE PATENTANMELDUNG

(11) **EP 0 726 191 A1**
(43) Veröffentlichungstag der Anmeldung: **14.08.1996**
(21) Anmeldenummer: 95118105.6
(22) Anmeldetag: 16.11.1995
(51) Int. Cl.: B62B 5/06, B62B 5/04

(54) **Schiebegriff**

(30) Priorität: 07.02.1995 DE 29501939 U
(71) Anmelder: Wanzl GmbH & Co. Entwicklungs-KG, D-89336 Leipheim (DE)
(72) Erfinder: Wanzl, Rudolf, D-89340 Leipheim (DE)

(57) **Zusammenfassung**

Die Erfindung betrifft einen stabförmigen Schiebegriff (1), dessen beide Enden (2) zum schwenkbaren Befestigen an einem von Hand bewegbaren Transportwagen (10) bestimmt sind, wobei der Schiebegriff (1) Mittel (3) aufweist, die geeignet sind, eine Verbindung des Schiebegriffes (1) mit einem Wirkmechanisums (9) herzustellen.
Es wird vorgeschlagen, die in Längsrichtung verlaufende Schwenkachse (8), bezogen auf den Querschnitt des Schiebegriffes (1), außermittig anzuordnen.

## Beschreibung

Die Erfindung betrifft einen stabförmigen Schiebegriff, dessen beide Enden zum schwenkbaren Befestigen an einem vom Hand bewegbaren Transportwagen bestimmt sind, wobei der Schiebegriff Mittel aufweist, die geeignet sind, eine Verbindung des Schiebegriffes mit einem Wirkmechanismus herzustellen.

Schiebegriffe dieser Art werden bei Transportwagen dann verwendet, wenn es gilt, den mit dem Schiebegriff gekoppelten Wirkmechanismus durch Verschwenken des Schiebegriffes zu aktivieren. Bekannte Anwendungsfälle sind beispielsweise in den deutschen Gebrauchsmustern G 93 11 364.1 und G 94 20 133.1 näher beschrieben.

Es ist Aufgabe der Erfindung, einen Schiebegriff der gattungsgemäßen Art so zu gestalten, daß dieser, im Vergleich zu herkömmlichen Schiebegriffen, eine Reduzierung des von Hand aufzubringenden Kraftaufwandes dann garantiert, wenn der Schiebegriff, an einem Transportwagen montiert, verschwenkt werden soll.

Die Lösung der Aufgabe besteht darin, daß die in Längsrichtung des Schiebegriffes verlaufende Schwenkachse, bezogen auf den Querschnitt des Schiebegriffes, außermittig angeordnet ist.

Während bei bisher bekannten Schiebegriffen deren Schwenkachsen, bezogen auf den Querschnitt der Schiebegriffe, immer exakt mittig angeordnet sind, läßt nunmehr die Erfindung in vorteilhafter Weise einen Schiebegriff mit unterschiedlich langen Hebelarmen entstehen. So ist es möglich, beim Verschwenken eines neuen Schiebegriffes über den langen Hebelarm die von Hand aufzubringende Kraft einzuleiten und über den kurzen Hebelarm diese nunmehr verstärkte Kraft auf den Wirkmechanismus zu übertragen. Dadurch läßt sich der zum Verschwenken des Schiebegriffes erforderliche Kraftaufwand erheblich reduzieren.

Die Erfindung wird anhand von Ausführungsbeispielen näher erläutert. Es zeigt
Fig. 1 einen Schiebegriff in räumlicher Darstellung;
Fig. 2 den Querschnitt des gleichen Schiebegriffes sowie
Fig. 3 den an einem Transportwagen montierten Schiebegriff.

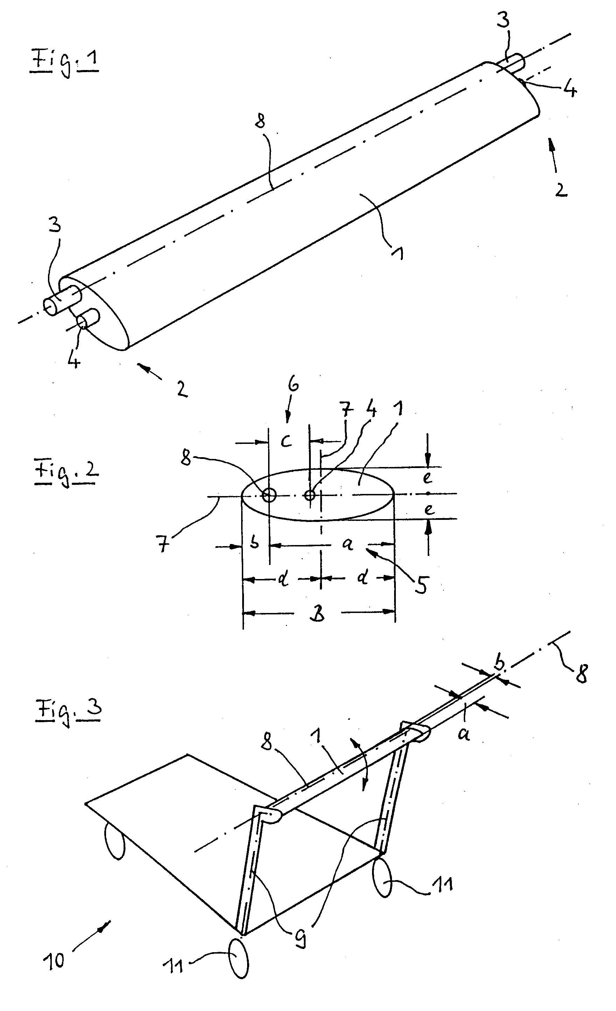

Der in Fig. 1 dargestellte Schiebegriff 1 ist stabförmig gestaltet. Er weist an seinen beiden Enden 2 Vorsprünge oder Zapfen, Vertiefungen, Bohrungen oder ähnlich geeignete Mittel 3 auf, die ein Befestigen des Schiebegriffes 1 an einem von Hand bewegbaren Transportwagen 10, vgl. Fig. 3, so erlauben, daß der Schiebegriff 1 um eine in der Regel horizontale Achse (Schwenkachse 8) verschwenkt werden kann. Die Mittel 3 sind auf der Schwenkachse 8 angeordet. An den beiden Enden 2 des Schiebegriffes 1 sind weitere geeignete Mittel 4 , z.B. ebenfalls Vorsprünge oder Bohrungen vorgesehen, mit der sich eine Verbindung mit einem Wirkmechanismus 9, vgl. Fig. 3, herstellen läßt.

Fig. 2 zeigt den Querschnitt des Schiebegriffes 1. Die Querschnittsform ist beliebig so gestaltet, daß ein angenehmes Umfassen des Schiebegriffes 1 möglich ist. Man wird bevorzugt eine längliche oder ovale Querschnittsform wählen, wobei natürlich eine kreisrunde Form ebenso möglich ist, wie weitere, von den beiden erstgenannten Ausführungen leicht abweichende unrunde Querschnittsformen. Die in Längsrichtung des Schiebegriffes 1 verlaufende Schwenkachse 8, vgl. Fig. 1, ist bezogen auf den Querschnitt oder die Querschnittsfläche des Schiebegriffes 1 außermittig angeordnet. Dies wird in der Zeichnung durch die Maße a größer b verdeutlicht, die zusammen die Breite B der Querschnittsfläche ergeben. Maß a bildet einen großen Hebelarm 5, während Maß c einen kleinen Hebelarm 6 darstellt, der zur Betätigung des Wirkmechanismus 9 bestimmt ist und der sich von der Schwenkachse 8 zu jenem Mittel 4 erstreckt, das für die Verbindung des Schiebegriffes 1 mit dem Wirkmechanismus 9 vorgesehen ist. Die Maße d und e legen die Lagen der Hauptachsen 7, 7' der Querschnittsformen fest, wobei im Beispiel die Schwenkachse 8 auf der horizontalen Hauptachse 7 angeordnet ist. Dies ist jedoch nicht Bedingung. Die Schwenkachse 8 kann auch in einem Abstand zur horizontalen Achse 7 angeordnet sein. Bei unrunden Querschnittsflächen kann die Schwenkachse 8 durchaus auch auf dem Flächenschwerpunkt der Querschnittsfläche angeordnet sein. Wichtig ist, daß auch bei solchen Ausführungsbeispielen a größer b ist.

Als praktisches Anwendungsbeipiel zeigt Fig. 3 einen Schiebegriff 1, der um seine Schwenkachse 8 verschwenkbar an einem von Hand bewegbaren Transportwagen 10 befestigt ist. Der Doppelpfeil soll die nach beiden Richtungen mögliche Verschwenkbarkeit des Schiebegriffes 1 darstellen. Die Schwenkachse 8 ist horizontal und quer zur Schieberichtung des Transportwagens 10 angeordnet. Zum besseren Verständnis sind auch die Maße a und b eingezeichnet, wobei leicht vorstellbar ist, daß eine den Transportwagen 10 schiebende Person den Schiebegriff 1 mit beiden Händen umfaßt und mit Hilfe der Handinnenfläche und vor allem mit den Handballen Druck auf den Hebelarm a ausübt. Bei dieser Gelegenheit sei erwähnt, daß der mit dem Schiebegriff 1 gekoppelte Wirkmechanismus 9 z.B. als eine auf die bevorzugt hinteren Räder 11 einwirkende Bremse ausgebildet sein kann. Auch ist es möglich, den Wirkmechanismus 9 als Arretiereinrichtung für die Verschwenkbarkeit von wenigstens einer Lenkrolle zu gestalten, wobei die Räder 11 des Transportwagens 10 durch die Lenkrollen gebildet sind. Ebenso ist es möglich, den Wirkmechanismus 9 als Lenkhilfe auzubilden, um beispielsweise das seitliche Abdriften von ausschließlich mit Lenkrollen ausgestatteten Transportwagen 10 zu verhindern. Alle diese Beipiele sollen verdeutlichen, daß durch das nunmehr äußerst leichte Verschwenken des Schiebegriffes 1 irgend ein Wirkmechanismus beeinflußt werden kann, der zum Ausüben von Steuerungsfunktionen auf einen Transportwagen 10 bestimmt ist. In bekannter Weise sind alle diese Wirkmechanismen 9 gewöhnlich so federbaufschlagt, daß nach dem Herunterdrücken des Schiebegriffes 1 und nach einem anschließenden Entlasten des Schiebegriffes 1 dieser wieder in seine Ausgangslage zurückschwenkt.

## Patentansprüche

1. Stabförmiger Schiebegriff, dessen beide Enden zum schwenkbaren Befestigen an einem von Hand bewegbaren Transportwagen bestimmt sind, wobei der Schiebegriff Mittel aufweist, die geeignet sind, eine Verbindung des Schiebegriffes mit einem Wirkmechanisums herzustellen, dadurch **gekennzeichnet,** daß die in Längsrichtung verlaufende Schwenkachse (8), bezogen auf den Querschnitt des Schiebegriffes (1), außermittig angeordnet ist.

2. Stabförmiger Schiebegriff nach Anspruch 1, dadurch **gekennzeichnet,** daß die zum schwenkbaren Befestigen des Schiebegriffes (1) erforderlichen, am Schiebegriff (1) befindlichen Mittel (3) auf der Schwenkachse (8) angeordnet sind.

3. Stabförmiger Schiebegriff nach Anspruch 1 oder 2, dadurch **gekennzeichnet,** daß die Mittel (3) durch Vorsprünge oder Zapfen, Vertiefüngen oder Bohrungen gebildet sind.

4. Stabförmiger Schiebegriff nach einem der Ansprüche 1 bis 3, dadurch **gekennzeichnet,** daß die Schwenkachse (8) auf dem Flächenschwerpunkt einer unrunden Querschnittsfläche des Schiebegriffes (1) angeordet ist.
